# EUROPÄISCHE PATENTSCHRIFT

(11) **EP 3 593 611 B1**
(45) Veröffentlichungstag und Bekanntmachung des Hinweises auf die Patenterteilung: **13.01.2021**
(21) Anmeldenummer: 19182779.9
(22) Anmeldetag: 27.06.2019
(51) Int. Cl.: A01B 49/02, A01B 29/04, A01B 21/08, A01B 63/10, A01B 63/111

(54) **LANDWIRTSCHAFTLICHE BODENBEARBEITUNGSMASCHINE**
AGRICULTURAL SOIL CULTIVATION MACHINE
MACHINE AGRICOLE DE TRAITEMENT DU SOL

(30) Priorität: 11.07.2018 DE 102018211455
(43) Veröffentlichungstag der Anmeldung: 15.01.2020
(73) Patentinhaber: Horsch Maschinen GmbH, 92421 Schwandorf (DE)
(72) Erfinder: HORSCH, Philipp, 92421 Schwandorf (DE)
(74) Vertreter: Benninger, Johannes

(56) Entgegenhaltungen:
- EP-A1- 2 534 933
- DE-A1-102010 054 946
- DE-A1-102013 007 038
- DE-A1-102013 105 254
- DE-B3-102014 104 417

## Beschreibung

Die Erfindung betrifft eine landwirtschaftliche Bodenbearbeitungsmaschine, insbesondere mit einer Mehrzahl von eine Bodenoberfläche bearbeitenden Sektionen, mit den Merkmalen des unabhängigen Anspruchs 1.

Eine landwirtschaftliche Bodenbearbeitungsmaschine ist z.B. durch die DE 10 2013 105 254 A1 bereits bekannt geworden. Die hierbei gezeigte landwirtschaftliche Bodenbearbeitungsmaschine umfasst eine Mehrzahl von eine Bodenoberfläche bearbeitende Sektionen, welche bspw. eine Lockerungssektion und eine Packersektion beinhalten, wobei mittels der Lockerungssektion jeweils eine Ackerfläche gelockert und anschließend mittels der Packersektion wieder rückverfestigt wird. Neben einer Rückverfestigung erfolgt mittels der Packersektion noch die Tiefeneinstellung und die Tiefenführung der landwirtschaftlichen Bodenbearbeitungsmaschine, wobei hierfür die Packersektion höhenverstellbar an einer die Lockerungssektion tragenden Rahmenkonstruktion angebaut ist. Um mittels der Bodenbearbeitungsmaschine eine für eine Straßenfahrt gesetzlich geforderte Transportbreite nicht zu überschreiten, sieht die Bodenbearbeitungsmaschine entsprechend Klappanschläge vor, welche nach dem Verschwenken einzelner Maschinensegmente die Bewegung, bzw. die Höhenverstellbarkeit begrenzen. Eine derartige landwirtschaftliche Bodenbearbeitungsmaschine weist jedoch zum einen den Nachteil auf, dass für eine Höhenverstellung der Packersektion eine Vielzahl von Verstellelementen wie bspw. hydraulisch betätigte Zylinder mit einer entsprechend aufwendigen Steuerungseinrichtung benötigt werden sowie dass für die Einhaltung einer gesetzlich geforderten Transportbreite entsprechend aufwendige Klappanschläge benötigt werden. Darüber hinaus ist eine Anpassung an Bodenunebenheiten nur bedingt möglich.

Der Erfindung liegt somit die Aufgabe zugrunde, eine landwirtschaftliche Bodenbearbeitungsmaschine mit einer vereinfachten Tiefenverstellung bei einer gleichzeitigen flexiblen Bodenanpassung zu schaffen. Ferner liegt der Erfindung die Aufgabe zugrunde, eine Bodenbearbeitungsmaschine zu schaffen, mittels der eine vereinfachte Einhaltung einer gesetzlich geforderten Transportbreite erreicht wird.

Diese Aufgaben werden gelöst durch eine landwirtschaftliche Bodenbearbeitungsmaschine mit den Merkmalen des unabhängigen Anspruchs 1. Vorteilhafte Weiterbildungen sind in den abhängigen Ansprüchen und der Beschreibung angegeben.

Die Erfindung betrifft eine landwirtschaftliche Bodenbearbeitungsmaschine mit einer Mehrzahl von eine Bodenoberfläche bearbeitenden Sektionen sowie mit einer die Sektionen tragenden Rahmenkonstruktion.

Die landwirtschaftliche Bodenbearbeitungsmaschine umfasst zudem eine aus eine Bodenoberfläche lockernde Arbeitswerkzeugen gebildete Lockerungssektion, wobei die Arbeitswerkzeuge der Lockerungssektion um quer zu einer Vorwärtsrichtung (Fahrtrichtung) der Bodenbearbeitungsmaschine orientierte Achsen rotatorisch an der Rahmenkonstruktion gelagert sind und wobei diese Rotation mittels Tiefenverstellungselementen in Bezug auf die Rahmenkonstruktion einstellbar ist.

Unmittelbar und/oder mittelbar an die Lockerungssektion nachfolgend ist eine Packersektion angeordnet, wobei die Packersektion aus zumindest zwei hintereinander angeordneten und jeweils eine Mehrzahl von über dessen Breite verteilt angeordneten Ringen zusammengesetzten Packerwalzen gebildet ist und wobei die Packerwalzen drehbar an einem Walzenrahmen gelagert sind.

Um eine landwirtschaftliche Bodenbearbeitungsmaschine mit einer vereinfachten Tiefenverstellung bei einer gleichzeitigen flexiblen Bodenanpassung zu schaffen sowie um eine Bodenbearbeitungsmaschine zu schaffen, mittels der eine vereinfachte Einhaltung einer gesetzlich geforderten Transportbreite erreicht wird, sieht die Erfindung vor, dass der Walzenrahmen um eine quer zu einer Vorwärtsrichtung orientierten und zwischen den zwei Packerwalzen sich befindenden Rotationsachse rotatorisch an der Rahmenkonstruktion gelagert ist, und dass der Walzenrahmen mit einem Anschlagelement zur Begrenzung der Rotation dieses wirkverbunden ist.

Die landwirtschaftliche Bodenbearbeitungsmaschine umfasst zumindest eine Lockerungssektion und eine dieser mittelbar und/oder unmittelbar nachgeordneten Packersektion, d.h. die Packersektion kann in Bezug auf eine Vorwärtsrichtung der Lockerungssektion direkt nachgeordnet sein oder es kann zwischen der Lockerungssektion und der Packersektion noch zumindest eine weitere, eine Bodenoberfläche bearbeitende Sektion zwischengelagert sein.

Es ist möglich, dass der Lockerungssektion zumindest eine weitere eine Bodenoberfläche bearbeitende Sektion vorgelagert und/oder nachgelagert bzw. vorgeordnet und/oder nachgeordnet ist.

Als vorgeordnete und/oder nachgeordnete Sektionen können bspw. Schneidsektionen (z.B. gebildet durch Arbeitswerkzeuge, die eine oder mehrere Messerwalzen oder Schneidwalzen umfassen) und/oder Einebnungssektionen (z.B. gebildet durch Arbeitswerkzeuge, die eine oder mehrere Einebnungselemente oder Planierelemente oder Striegelelemente umfassen) vorgesehen sein bzw. verwendet werden.

Die Rahmenkonstruktion kann ein- oder mehrteilig ausgeführt sein. Die Rahmenkonstruktion kann zudem kraft-, form- und/oder stoffschlüssig erfolgen. Die kraft- und/oder formschlüssige Verbindung kann z. B. Schraub-, Niet- und/oder Klemmverbindungen oder dergleichen umfassen. Die stoffschlüssige Verbindung kann z.B. Schweiß-, Klebe- und/oder Lötverbindungen oder dergleichen umfassen. Wahlweise wären zudem Kombinationen einer kraft-, form- und/oder stoff-schlüssigen Verbindung denkbar.

Die Rahmenkonstruktion kann bspw. einen Hauptrahmen (z.B. gebildet durch eine stoffschlüssige Verbindung) umfassen, an welchem Hauptrahmen wiederum Rahmenelemente (z.B. gebildet durch eine stoffschlüssige Verbindung) der jeweiligen Sektionen angebaut werden können (z.B. mittels einer kraft-, formschlüssigen Verbindung).

Insbesondere kann die Rahmenkonstruktion mehrteilig ausgeführt sein und sich aus mehreren stoffschlüssigen Verbindungen (z. B. Schweißkonstruktionen), welche mittels Kraft- und Formschlussverbindungen (z. B. Schraubverbindungen) verbunden werden, zusammensetzen.

Die Lockerungssektion kann als Arbeitswerkzeuge z.B. Schneidscheiben oder Zinkenwerkzeuge oder Schare umfassen. Die Arbeitswerkzeuge können zudem einreihig oder mehrreihig angeordnet sein. Insbesondere können die Arbeitswerkzeuge jedoch zweireihig angeordnet sein. Es kann vorgesehen sein, dass zudem jeweils eine Mehrzahl von Arbeitswerkzeugen quer zur Vorwärtsrichtung der Bodenbearbeitungsmaschine beabstandet zueinander angeordnet sind. Zudem können die Arbeitswerkzeuge bei einer mehrreihigen Anordnung zueinander versetzt angeordnet sein.

Die Arbeitswerkezuge können schwenkbeweglich an einem Träger angebracht sein. Insbesondere können die Arbeitswerkzeuge mittels Federelementen (z.B. mittels Druckfeder, Elastomerlager oder dergl.) schwenkbeweglich an einem gemeinsamen Träger angebracht sein. Ebenso können die Arbeitswerkzeuge der Schneidsektionen und/oder der Einebnungssektionen jeweils an einem Träger montiert sein.

Es sei darauf hingewiesen, dass die Arbeitswerkzeuge direkt und/oder mittels eines gemeinsamen Trägers rotatorisch an bzw. in der Rahmenkonstruktion gelagert sein können, so dass die hierin beschriebene rotatorische Lagerung der Arbeitswerkzeuge gleichermaßen auch eine rotatorische Lagerung eines Trägers, an dem Arbeitswerkzeuge montiert sind, mit umfasst.

Die Arbeitswerkzeuge sind direkt oder mittels des gemeinsamen Trägers rotatorisch an bzw. in der Rahmenkonstruktion gelagert. Zudem ist vorgesehen, dass die jeweilig Rotation, d.h. die Winkelposition dieser im Bezug zur Rahmenkonstruktion bzw. in Bezug zu einer Bodenoberfläche mittels Tiefenverstellungselementen einstellbar ist, und wobei in Abhängigkeit der Winkelposition jeweils die Arbeitstiefe der eine Bodenoberfläche bearbeitenden Sektionen (insbesondere der Lockerungssektion, der Einebnungssektion und der Schneidsektion) einstellbar ist.

Durch die rotatorische Lagerung erfolgt mittels der Tiefenverstellungselemente eine reine rotatorische Bewegung der Arbeitswerkzeuge jedoch keine translatorische (Linear) Bewegung.

Die Lagerung der Arbeitswerkezeuge erfolgt bspw. mittels eines zwischen den Arbeitswerkzeugen (bzw. dem Träger) und der Rahmenkonstruktion angebrachten Lager, (z.B. Gleitlager, Wälzlager oder dergl.).

Es ist möglich, dass der Rahmenkonstruktion Ausschnitte und/oder Aufnahmen zugeordnet sind, in denen die Arbeitswerkzeuge der Sektionen gelagert sind, d.h. es kann vorgesehen sein, dass die Lager in die Rahmenkonstruktion integriert sind.

Als Tiefenverstellungselement können bspw. hydraulisch und/oder pneumatisch und/oder elektrisch betriebene Aktoren (z.B. Linearantriebe, Spindeltriebe oder dergl.) verwendet werden. Die Aktoren können zudem mittels einer hydraulischen und/oder pneumatisch und/oder elektrischen und/oder einer Kombination dieser Energieübertragungsarten betriebenen Steuerungseinrichtung und/oder Regelungseinrichtung wirkverbunden sein.

Als Tiefenverstellungselemente wären zudem mechanische Stellelemente, welche manuell betätigt werden können, vorstellbar bzw. einsetzbar.

Den Tiefenverstellungselementen können zudem jeweils, dessen Verfahrweg begrenzende Elemente zugeordnet sein (z.B. Einlegebleche, Einlegestücke oder dergl.), durch welche Elemente wiederum die jeweilige Rotation entsprechend eingestellt werden kann.

Um eine exakte Tiefenführung der landwirtschaftlichen Bodenbearbeitungsmaschine zu gewährleisten, ist dieser einer Packersektion zugeordnet, wobei die Packersektion sich aus zumindest zwei hintereinander angeordneten Packerwalzen zusammensetzt.

Die Packerwalzen weisen jeweils eine Mehrzahl von über dessen Breite verteilte Ringe auf, insbesondere von in regelmäßigen Abständen zueinander über dessen Breite verteilte Ringe.

Die zumindest zwei Packerwalzen können zudem identische Ringe oder unterschiedliche Ringe aufweisen. Auch können die Ringe der Packerwalzen in Bezug quer zur Vorwärtsrichtung zueinander versetzt angeordnet sein.

Des Weiteren können die zumindest zwei Packerwalzen in einem Abstand zueinander drehbar an einem Walzenrahmen angeordnet sein, der kleiner ist als dessen Durchmesser, so dass die Ringe der Packerwalzen ineinander ragen bzw. greifen. Darüber hinaus wäre es jedoch auch denkbar, dass die Packerwalzen in einem Abstand zueinander angeordnet sind, der größer als dessen Durchmesser ist.

Die Ringe der Packerwalzen können eine Umlauffläche aufweisen, die nicht elastisch verformbar ist. Die Ringe können jedoch auch eine elastisch verformbare Umlauffläche aufweisen und bspw. aus federnden Elementen gebildet sein.

Die Umlauffläche kann zumindest abschnittsweise Flach ausgebildet sein oder V-förmig oder U-Förmig oder T-Förmig ausgebildet sein oder die Umlauffläche kann einen ringförmigen Steg aufweisen.

Um eine landwirtschaftliche Bodenbearbeitungsmaschine zu schaffen, welche eine vereinfachte Tiefeneinstellung bei einer gleichzeitigen flexiblen Bodenanpassung aufweist, ist zudem vorgesehen, dass die Packersektion nicht höhenverstellbar an der Rahmenkonstruktion angebracht ist, sondern dass die Tiefeneinstellung der Bodenbearbeitungsmaschine durch eine Rotation der der Packersektion vorgeordneten Sektionen, insbesondere der Lockerungssektion, erfolgt, wobei jedoch die Packersektion bzw. der Walzenrahmen der Packersektion um eine quer zur einer Vorwärtsrichtung orientierten Rotationsache rotatorisch an der Rahmenkonstruktion gelagert ist.

Um zudem eine gesetzlich geforderte Transportbreite durch die freie Schwenkbarkeit nicht zu überschreiten, ist zudem vorgesehen, dass der Walzenrahmen mit einem Anschlagelement derartig wirkverbunden ist, dass eine Rotation des Walzenrahmens in zumindest eine Richtung ab einer definierten und/oder definierbaren Rotation begrenzt wird, d.h. dass zumindest ein Bewegungsgrad der Rotation um die Rotationsachse begrenzt wird.

Die Rotationsachse befindet sich insbesondere zwischen den zumindest zwei die Packersektion bildenden Packerwalzen. Vorzugsweise befindet sich die Rotationsachse zumindest weitgehend mittig zwischen den zwei Packerwalzen, wobei die Rotationsachse hierbei insbesondere oberhalb der Lagerungen der Packerwalzen oder oberhalb der Packerwalzen angeordnet sein kann, aber auch auf einer Ebene der Lagerungen der Packerwalzen liegen kann. Ebenso kann die Rotationsachse sich auch unterhalb dieser Ebene befinden.

Es ist möglich, dass die Packersektion eine Tandemanordnung bildet, mit welcher Tandemanordnung wiederum ein Anschlagelement wirkverbunden ist.

Das Anschlagelement kann variabel einstellbar sein, so dass bspw. der jeweilige Bewegungsgrad der Packersektion veränderbar ist. Zudem kann vorgesehen sein, dass das Anschlagelement zumindest zwei Positionen einnehmen kann, bspw. eine erste Position, die in einer Arbeitsposition der landwirtschaftlichen Bodenbearbeitungsmaschine einen ersten Bewegungsgrad der Packersektion definiert, sowie eine zweite Position, die in einer Transportposition der landwirtschaftlichen Bodenbearbeitungsmaschine einen zweiten Bewegungsgrad der Packersektion definiert. Die zwei Positionen können bspw. mittels Steckelementen entsprechend definiert werden. Zweckmäßig kann vorgesehen sein, dass der erste Bewegungsgrad größer ist als der zweite Bewegungsgrad.

Das Anschlagelement kann zudem derartig mit dem Walzenrahmen wirkverbunden sein, dass eine Rotation des Walzenrahmens an der Rahmenkonstruktion gänzlich unterbunden wird, insbesondere ab einer definierten und/oder definierbaren Rotation des Walzenrahmens gänzlich unterbunden wird.

Das Anschlagelement kann sich aus einem im Walzenrahmen und/oder in der Rahmenkonstruktion angebrachten Ausschnitt und einem in der Rahmenkonstruktion und/oder im Walzenrahmen angebrachten Anschlagbolzen zusammensetzen. Wahlweise wären auch andere, insbesondere einteilige Anschlagelemente, denkbar bzw. einsetzbar.

Als Anschlagelement können auch hydraulisch und/oder pneumatisch und/oder elektrisch betriebene Aktoren (z.B. Linearantriebe, Spindeltriebe oder dergl.) verwendet werden, welche Aktoren zudem mittels einer hydraulischen und/oder pneumatisch und/oder elektrischen und/oder einer Kombination dieser Energieübertragungsarten betriebenen Steuerungseinrichtung und/oder Regelungseinrichtung wirkverbunden sein können.

In einer Weiterbildung der Erfindung kann zwischen dem Walzenrahmen und der Rahmenkonstruktion ein Vorspannelement (z. B. Elastomerlager, Druckfeder, oder dergl.) angebracht sein, mittels welchen Vorspannelement jeweils die Beweglichkeit angepasst werden kann. Insbesondere kann das Vorspannelement auch dem Anschlagelement bzw. den das Anschlagelement bildenden Komponenten zugeordnet sein.

Die landwirtschaftliche Bodenbearbeitungsmaschine kann sich aus zwei oder mehr Segmenten zusammensetzen. So wäre es denkbar, dass die Bodenbearbeitungsmaschine ein Mittelsegment umfasst, an welchem Mittelsegment jeweils links und rechts Seitensegmente angebracht sind, wobei die Seitensegmente wiederum über horizontal verlaufende Schwenkachsen verschwenkbar zum Mittelsegment sind, um somit die Bodenbearbeitungsmaschine in eine für eine Transportfahrt maximal zulässige Breite überführen zu können. Zudem können zumindest den Seitensegmenten entsprechende eine Bodenoberfläche bearbeitende Sektionen zugeordnet sein. Insbesondere kann zumindest den Seitensegmenten jeweils eine Packersektion zugeordnet sein. In einer Weiterbildung kann zudem vorgesehen sein, dass auch die Seitensegmente sich wiederum aus zwei oder mehr Teilsegmenten zusammensetzen.

In einer bevorzugten Ausführungsvariante können die Sektionen der einzelnen Segmente in einer Arbeitsposition quer zur Vorwärtsrichtung (Fahrtrichtung) der Bodenbearbeitungsmaschine zumindest weitgehend linear, d.h. fluchtend zueinander angebracht sein. Insbesondere sind zumindest die Packerwalzen der Packersektion fluchtend zueinander angebracht.

Um die Tiefenführung der Bodenbearbeitungsmaschine zu verbessern, können dieser bzw. den Sektionen vorgeordnet oder zwischen den Sektionen angebrachte Tiefenführungselemente, insbesondere in Form von Tiefenführungsräder, zugeordnet sein, welche Tiefenführungsräder wiederum rotatorisch an bzw. in der Rahmenkonstruktion gelagert sein können.

Der Bodenbearbeitungsmaschine kann zudem ein Fahrwerk zugeordnet sein, mittels welchen die Bodenbearbeitungsmaschine auf öffentlichen Straßen bewegt werden kann. Insbesondere kann das Fahrwerk der Packersektion nachgeordnet sein. Das Fahrwerk kann zudem höhenverstellbar (z.B. mittels hydraulischer Zylinder) an der Rahmenkonstruktion angebracht sein.

Es ist möglich, dass die Bodenbearbeitungsmaschine eine Ausbringsektion aufweist, welcher Ausbringsektion eine Mehrzahl von Säscharen zur Verteilung von landwirtschaftlichem Verteilgut (z.B. Saatgut, Dünger, oder dergl.) zugeordnet sein kann. Die Ausbringsektion ist bspw. zwischen der Lockerungssektion und der Packersektion angebracht. Ebenso kann die Ausbringsektion nach der Packersektion angebracht sein. Auch kann die Ausbringsektion rotatorisch und/oder höhenverstellbar in bzw. an der Rahmenkonstruktion angebracht sein.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
Figur 1 eine Perspektivansicht einer Ausführungsvariante einer landwirtschaftlichen Bodenbearbeitungsmaschine,
Figur 2A eine Seitenansicht einer Ausführungsvariante einer landwirtschaftlichen Bodenbearbeitungsmaschine mit einer Lockerungssektion und einer Packersektion, wobei die Packersektion hierbei keine rotatorische Auslenkung aufweist,
Figur 2B eine Seitenansicht einer landwirtschaftlichen Bodenbearbeitungsmaschine gemäß Figur 2A, wobei die Packersektion hierbei rotatorisch ausgelenkt ist und die Lockerungssektion nach unten rotiert ist,
Figur 3A eine Detailansicht eines Walzenrahmens mit einem, mit diesem wirkverbundenen Anschlagelement, wobei die Packersektion hierbei keine rotatorische Auslenkung aufweist, und
Figur 3B eine Detailansicht eines Walzenrahmens mit einem, mit diesem wirkverbundenen Anschlagelement, wobei die Packersektion hierbei rotatorisch ausgelenkt ist.

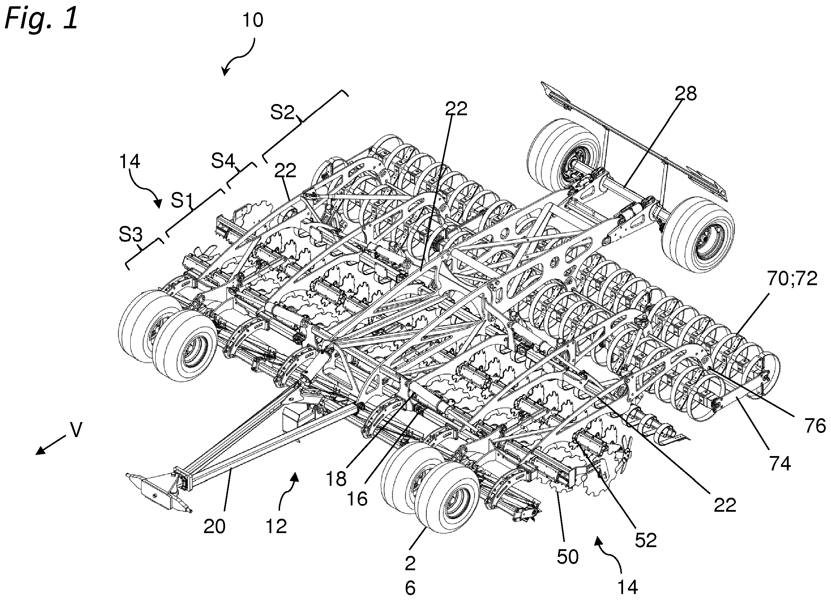

Die in den Figuren 1 bis 3B gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden. Die dargestellten Ausführungsformen stellen lediglich Beispiele dar, wie die erfindungsgemäße landwirtschaftliche Bodenbearbeitungsmaschine ausgestaltet sein kann und stellen keine abschließende Begrenzung dar.

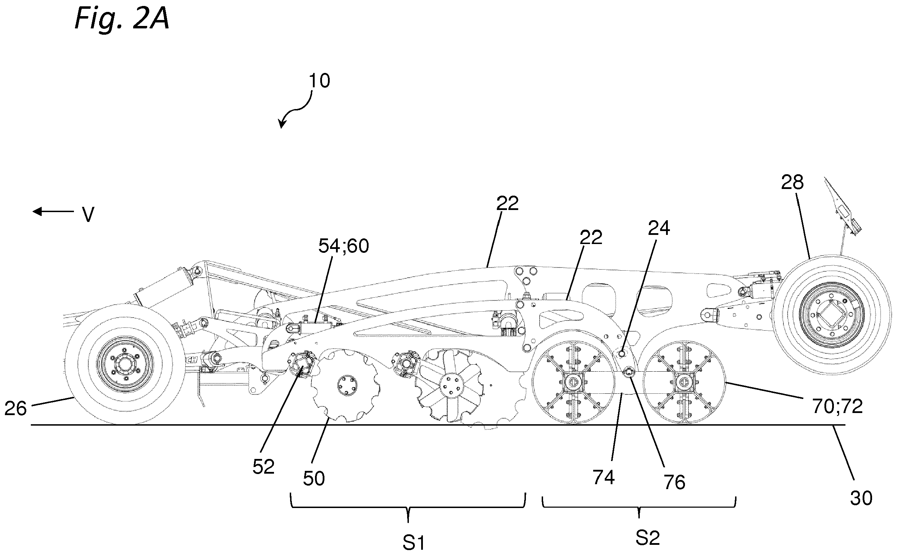

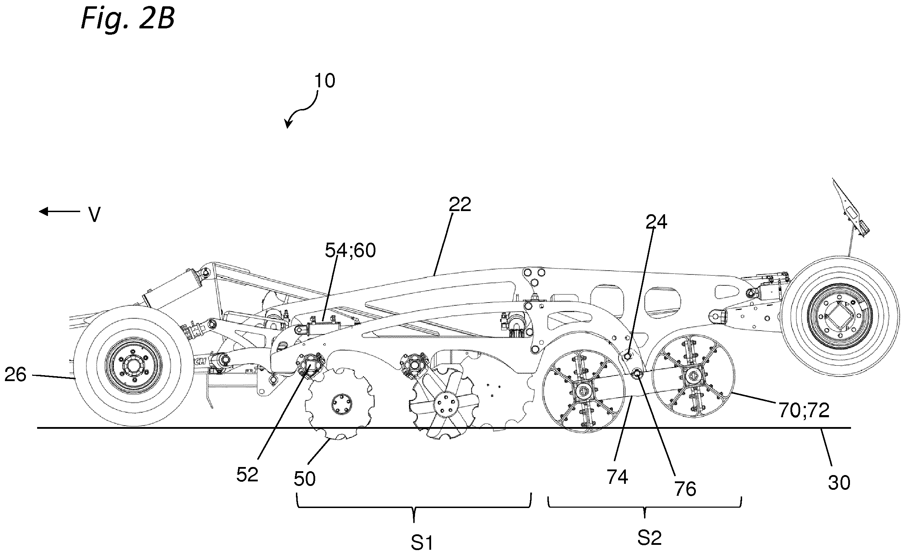

Ein Ausführungsbeispiel einer landwirtschaftlichen Bodenbearbeitungsmaschine 10 geht aus der Perspektivansicht der Figur 1 sowie aus den Seitenansichten der Figuren 2A und 2B hervor. Die Bodenbearbeitungsmaschine 10 weist eine große Arbeitsbreite von bspw. etwa sechs Metern auf und setzt sich aus drei Segmenten, insbesondere einem Mittelsegment 12 und jeweils links und rechts zu diesem angeordneten Seitensegmenten 14 zusammen. Die Seitensegmente 14 können jeweils um horizontal verlaufende Schwenkachsen 16 zum Mittelsegment 12 verschwenkt werden. Hierfür sind insbesondere hydraulisch betriebene Zylinder 18 angebracht. Die Seitensegmente 14 sind zudem jeweils einteilig ausgeführt, d.h. diese weisen jeweils nur ein Teilsegment auf. Es wäre jedoch auch denkbar, dass diese sich aus zwei oder mehr Teilsegmenten zusammensetzen.

In Vorwärtsrichtung V bzw. in Fahrtrichtung V ist dem Mittelsegment 12 zudem eine Zugvorrichtung 20 zugeordnet, mittels welcher Zugvorrichtung 20 die Bodenbearbeitungsmaschine 10 mit einem hier nicht dargestellten Zugfahrzeug (z.B. Traktor) verbunden werden kann. Die Zugvorrichtung 20 ist mit einer Rahmenkonstruktion 22 verbunden, insbesondere mit einer Rahmenkonstruktion 22 des Mittelsegments 12.

Die landwirtschaftliche Bodenbearbeitungsmaschine 10 weist jeweils wenigstens zwei eine Bodenoberfläche bearbeitende Sektionen auf, wobei es sich bei den Sektionen um zumindest eine Lockerungssektion S1 und eine Packersektion S2 handelt. Zudem ist gemäß der Figur 1 der Lockerungssektion S1 eine Schneidsektion 2, gebildet durch eine Messerwalze, vorgeordnet, sowie zwischen der Lockerungssektion S1 und der Packersektion S2 angeordnet eine Einebnungssektion S4. Hierbei wären wiederum auch andere Anordnungen denkbar.

Die Lockerungssektion S1 umfasst über zwei Reihen verteilte und in regelmäßigen Abständen zueinander angeordnete Arbeitswerkzeuge 50. Mittels der Arbeitswerkzeuge 50 gemäß der Ausführungsbeispiele der Figuren 1 bis 3 in Form von Schneidscheiben, kann jeweils eine Bodenoberfläche 30 gelockert werden. Die Arbeitswerkzeuge 50 sind um quer zur Vorwärtsrichtung V orientierte Achsen 52 rotatorisch an der Rahmenkonstruktion 22 gelagert. Zudem ist vorgesehen, dass deren Rotation jeweils mittels Tiefenverstellungselementen 54 in Bezug auf die Rahmenkonstruktion 22 bzw. in Bezug auf die Bodenoberfläche 30 verstellbar ist (vergl. Figuren 2A und 2B).

Gemäß den Ausführungsbeispielen können die Arbeitswerkzeuge 50 zudem schwenkbeweglich (z.B. mittels Elastomerlager) an einem gemeinsamen Träger 56 angebracht sein, wobei wiederum mittels dieses Trägers 56 die Arbeitswerkzeuge 50 rotatorisch an der Rahmenkonstruktion 22 gelagert sind. Hierbei ist zudem die jeweilige Rotation der Arbeitswerkzeuge 50 mittels eines mit dem Träger 56 wirkverbundenen Tiefenverstellungselements 54 einstellbar.

Das Tiefenverstellungselement 54 ist als hydraulisch betriebener Aktor 60, insbesondere hydraulisch betriebener Linearantrieb, ausgebildet, welcher Aktor 60 zudem mit einer hydraulisch und/oder pneumatisch und/oder elektrisch betriebenen Steuerungsreinrichtung und/oder Regelungseinrichtung wirkverbunden sein kann.

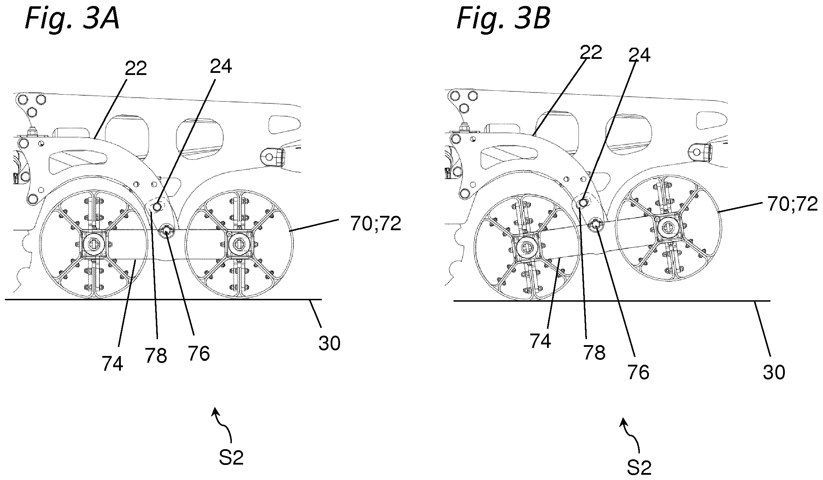

Unmittelbar (siehe Figuren 2 und 3) und/oder mittelbar (siehe Figur 1) an die Lockerungssektion S1 nachfolgend befindet sich eine Packersektion S2. Die Packersektion S2 umfasst jeweils zwei hintereinander angeordnete Packerwalzen 70. Die Packerwalzen 70 setzen sich zudem aus einer Mehrzahl von über dessen Breite verteilt angeordneten Ringen 72 zusammen, welche Ringe 72 zudem seitlich voneinander beabstandet sind. Zudem sind die Ringe 72 der Packerwalzen 70 versetzt zueinander angeordnet. Die Packerwalzen 70 sind darüber hinaus drehbar an einem Walzenrahmen 74 gelagert.

Zudem ist der Walzenrahmen 74 um eine quer zur Vorwärtsrichtung V orientierte und zwischen den zwei Packerwalzen 70 angeordnete Rotationsachse 76 rotatorisch an der Rahmenkonstruktion 22 gelagert.

Zur Begrenzung der Rotation des Walzenrahmens 74 ist mit diesem ein Anschlagelement A wirkverbunden (siehe Figuren 3A und 3B). Das Anschlagelement A setzt sich gemäß den Figuren 1 bis 3B aus einem im Walzenrahmen 74 angebrachten Ausschnitt 78 und einem in der Rahmenkonstruktion angebrachten Anschlagbolzen 24 zusammen. Wahlweise wären auch andere, insbesondere einteilige Anschlagelemente denkbar bzw. einsetzbar.

Die Rahmenkonstruktion 22 ist mehrteilig ausgeführt und setzt sich aus mehreren stoffschlüssigen Verbindungen (Schweißkonstruktionen), welche mittels Kraft- und Formschlussverbindungen (Schraubverbindungen) verbunden werden, zusammen. Insbesondere weist gemäß den Ausführungsbeispielen jedes Segment eine derartige Rahmenkonstruktion auf.

Die Ringe 72 der Packerwalzen 70 weisen eine elastisch verformbare Umlauffläche auf, d.h. die Ringe 72 verformen sich jeweils bei Bewegungen dieser entlang einer Bodenoberfläche 30. Diese Elastizität hat den Vorteil, dass zwar eine ausreichend Rückerverfestigung der vorab mittels der Lockerungssektion S1 gelockerten Bodenoberfläche 30 erfolgt, dennoch wird noch eine feinkrümelige Erdschicht erzeugt. Zudem ist die Umlauffläche der Ringe 72 jeweils flach ausgeführt.

Gegenüber den aus dem Stand der Technik bekannten Bodenbearbeitungsmaschinen 10 ist bei der Bodenbearbeitungsmaschine 10 gemäß den Ausführungsbeispielen die Packersektion S2 nicht höhenverstellbar zur Rahmenkonstruktion 22 angebracht, wodurch ein wesentlich vereinfachter Aufbau der Bodenbearbeitungsmaschine erreicht wird.

Die Rotationsachse 76 befindet sich jeweils zwischen den zwei Packerwalzen 70, insbesondere jeweils weitgehend mittig zwischen den zwei Packerwalzen 70. Die Packersektion S2 kann somit eine Tandemanordnung ausbilden, wobei die Tandemanordnung wiederum mit einem Anschlagelement A wirkverbunden ist.

Die an der landwirtschaftlichen Bodenbearbeitungsmaschine 10 angebrachten Sektionen sind jeweils in Bezug quer zu einer Vorwärtsrichtung linear, d.h. fluchtend zueinander angebracht.

Um die Tiefenführung der Bodenbearbeitungsmaschine 10 noch weiter zu verbessern, ist dieser, insbesondere dem Seitensegmenten 16, zusätzlich jeweils ein Tiefenführungselement 26 in Form eines Tiefenführungsrades zugeordnet.

Darüber hinaus ist der Bodenbearbeitungsmaschine 10 im Ausführungsbeispiel der Figur 1 dem Mittelsegment 12 ein Fahrwerk 28 zugeordnet, wobei das Fahrwerk 28 Laufräder aufweist, mittels welchen die Bodenbearbeitungsmaschine 10 auf öffentlichen Straßen bewegt werden kann. Das Fahrwerk 28 ist zudem höhenverstellbar (z.B. mittels hydraulischer Zylinder) an der Rahmenkonstruktion 22 angebracht.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 10: Bodenbearbeitungsmaschine
- 12: Mittelsegment
- 14: Seitensegment
- 16: Schwenkachse
- 18: Zylinder
- 20: Zugvorrichtung
- 22: Rahmenkonstruktion
- 24: Anschlagbolzen
- 26: Tiefenführungselement
- 28: Fahrwerk
- 30: Bodenoberfläche

- 50: Arbeitswerkzeug
- 52: Achse
- 54: Tiefenverstellungselement
- 56: Träger

- 60: Aktor

- 70: Packerwalze
- 72: Ring
- 74: Walzenrahmen
- 76: Rotationsachse
- 78: Ausschnitt

- V: Vorwärtsrichtung, Fahrrichtung

- S1: Lockerungssektion
- S2: Packersektion
- S3: Schneidsektion
- S4: Einebnungssektion

## Patentansprüche

1. Landwirtschaftliche Bodenbearbeitungsmaschine (10) mit einer Mehrzahl von eine Bodenoberfläche (30) bearbeitenden Sektionen sowie mit einer die Sektionen tragenden Rahmenkonstruktion (22), und mit:
- einer Lockerungssektion (S1), die aus Arbeitswerkzeugen (30) zur Lockerung einer oder der Bodenoberfläche (30) gebildet ist, wobei die Arbeitswerkzeuge (50) der Lockerungssektion (S1) um quer zu einer Vorwärtsrichtung (V) der Bodenbearbeitungsmaschine (30) orientierte Achsen (52) rotatorisch an der Rahmenkonstruktion (22) gelagert sind, und wobei die Rotation mittels Tiefenverstellungselementen (54) in Bezug auf die Rahmenkonstruktion (22) einstellbar ist,
- einer der Lockerungssektion (S1) unmittelbar und/oder mittelbar nachfolgenden Packersektion (S2), welche Packersektion (S2) aus zumindest zwei hintereinander angeordneten und jeweils eine Mehrzahl von über dessen Breite verteilt angeordneten Ringen (72) zusammengesetzten Packerwalzen (70) gebildet ist, wobei die Packerwalzen (70) drehbar an einem Walzenrahmen (74) gelagert sind,
**dadurch gekennzeichnet, dass** der Walzenrahmen (74) um eine quer zu einer oder zur Vorwärtsrichtung (V) orientierte und zwischen den zwei Packerwalzen (70) sich befindende Rotationsachse (76) rotatorisch an der Rahmenkonstruktion (22) gelagert ist, wobei der Walzenrahmen (74) mit einem Anschlagelement (A) zur Begrenzung der Rotation des Walzenrahmens (74) wirkverbunden ist.

2. Bodenbearbeitungsmaschine nach Anspruch 1, **dadurch gekennzeichnet, dass** diese eine der Lockerungssektion (S1) vorgeordnete und/oder nachgeordnete Schneidsektion (S3) und/oder Einebnungssektion (S4) umfasst.

3. Bodenbearbeitungsmaschine nach Anspruch 1 oder 2, **dadurch gekennzeichnet, dass** die Arbeitswerkzeuge (50) schwenkbeweglich an einem Träger (56) montiert sind, welcher Träger (56) um Achsen (52) rotatorisch an der Rahmenkonstruktion (22) gelagert ist.

4. Bodenbearbeitungsmaschine nach einem der vorhergehenden Ansprüche, **dadurch gekennzeichnet, dass** die Rotationsachse (76) sich zumindest weitgehend mittig zwischen den zwei Packerwalzen (70) befindet und/oder dass die Packersektion (S2) eine Tandemanordnung bildet.

5. Bodenbearbeitungsmaschine nach Anspruch 4, **dadurch gekennzeichnet, dass** sich die Rotationsachse (76) oberhalb der Lagerung der Packerwalzen (70) befindet.

6. Bodenbearbeitungsmaschine nach einem der vorhergehenden Ansprüche, **dadurch gekennzeichnet, dass** das Anschlagelement (A) variabel einstellbar ist.

7. Bodenbearbeitungsmaschine nach einem der vorhergehenden Ansprüche, **dadurch gekennzeichnet, dass** das Anschlagelement (A) zwei Positionen einnehmen kann, welche Positionen jeweils Bewegungsgrade der Packersektion (S2) definieren.

8. Bodenbearbeitungsmaschine nach Anspruch 7, **dadurch gekennzeichnet, dass** die Bewegungsgrade unterschiedlich sind.

9. Bodenbearbeitungsmaschine nach einem der vorhergehenden Ansprüche, **dadurch gekennzeichnet, dass** der Rahmenkonstruktion (22) Ausschnitte und/oder Aufnahmen zugeordnet sind, in denen die Arbeitswerkzeuge (50) der Sektionen gelagert sind.

10. Bodenbearbeitungsmaschine nach einem der vorhergehenden Ansprüche, **dadurch gekennzeichnet, dass** zwischen dem Walzenrahmen (74) und der Rahmenkonstruktion (22) ein Vorspannelement angeordnet ist.

11. Bodenbearbeitungsmaschine nach einem der vorhergehenden Ansprüche, **dadurch gekennzeichnet, dass** diese ein Mittelsegment (12) und jeweils rechts und links zu diesem über horizontal verlaufende Schwenkachsen (16) angebrachte Seitensegmente (14) aufweist, wobei zumindest an den Seitensegmenten (14) zumindest eine Lockerungssektion (S1) und/oder eine Packersektion (S2) angebracht ist und wobei zumindest die Packerwalzen (70) der Packersektion (S2) zueinander fluchtend angebracht sind.

12. Bodenbearbeitungsmaschine nach einem der vorhergehenden Ansprüche, **dadurch gekennzeichnet, dass** diese ein Ausbringsektion aufweist, welche rotatorisch und/oder höhenverstellbar an der Rahmenkonstruktion (22) gelagert ist und welche zwischen der Lockerungssektion (S1) und der Packersektion (S2) und/oder nach der Packersektion (S2) angebracht ist.

## Claims

1. An agricultural soil cultivating machine (10) having a plurality of sections, which sections cultivate a soil surface (30), and having a frame structure (22) supporting the sections, and having
- a loosening section (S1), which loosening section (S1) is formed by working tools (50) for loosening a or said soil surface (30), wherein the working tools (50) of the loosening section (S1) are rotatably mounted on the frame structure (22) about axes (52), which axes (52) are oriented transversely to a forward direction (V) of the soil cultivating machine (10), and wherein the rotation is adjustable relative to the frame structure (22) by means of depth adjustment elements (54),
- a packer section (S2), which is arranged directly and/or indirectly following the loosening section (S1), which packer section (S2) is formed from at least two packer rollers (70) which are arranged one behind the other and which are each composed of a plurality of rings (72) that are distributed over their width, the packer rollers (70) being rotatably mounted on a roller frame (74),
**characterised in that** the roller frame (74) is rotatably mounted on the frame structure (22) about an axis of rotation (76), which axis of rotation (76) is oriented transversely to a forward direction (V) or to the forward direction (V) and is located between the two packer rollers (70), the roller frame (74) being operatively connected to a stop element (A) for limiting the rotation of the roller frame (74).

2. The soil cultivating machine according to claim 1, **characterised in that** it comprises a cutting section (S3) and/or levelling section (S4) arranged upstream and/or downstream of the loosening section (S1).

3. The soil cultivating machine according to claim 1 or 2, **characterised in that** the working tools (50) are pivotably mounted on a carrier (56), which carrier (56) is rotatably mounted about axes (52) on the frame structure (22).

4. The soil cultivating machine according to one of the preceding claims, **characterised in that** the axis of rotation (76) is located at least substantially centrally between the two packer rollers (70) and/or that the packer section (S2) forms a tandem arrangement.

5. The soil cultivating machine according to claim 4, **characterised in that** the axis of rotation (76) is located above the bearing of the packer rollers (70).

6. The soil cultivating machine according to one of the preceding claims, **characterised in that** the stop element (A) is variably adjustable.

7. The soil cultivating machine according to one of the preceding claims, **characterized in that** the stop element (A) can assume two positions, which positions respectively define degrees of movement of the packer section (S2).

8. The soil cultivating machine according to claim 7, **characterised in that** the degrees of movement are different.

9. The soil cultivating machine according to one of the preceding claims, **characterised in that** cut-outs and/or receptacles are associated with the frame structure (22), in which cut-outs and/or receptacles the working tools (50) of the sections are mounted.

10. The soil cultivating machine according to one of the preceding claims, **characterized in that** a pre-tensioning element is arranged between the roller frame (74) and the frame structure (22).

11. The soil cultivating machine according to one of the preceding claims, **characterised in that** it comprises a central segment (12) and side segments (14) that are each mounted to the right and left of this central segment (12) via horizontally extending pivot axes (16), wherein at least a loosening section (S1) and/or a packer section (S2) is mounted at least on the side segments (14) and wherein at least the packer rollers (70) of the packer section (S2) are mounted in alignment with one another.

12. The soil cultivating machine according to one of the preceding claims, **characterised in that** it comprises a spreading section which is mounted rotatably and/or height-adjustably on the frame structure (22) and which is mounted between the loosening section (S1) and the packer section (S2) and/or downstream of the packer section (S2).

## Revendications

1. Machine agricole de travail du sol (10) dotée d'une pluralité de sections travaillant une couche superficielle de sol (30) ainsi que d'une construction de châssis (22) portant lesdites sections, et de :
- une section d'ameublissement (S1) constituée d'outils de travail (50) destinés à ameublir une ou ladite couche superficielle de sol (30), lesdits outils de travail (50) de la section d'ameublissement (S1) étant disposés sur la construction de châssis (22) en rotation autour d'axes (52) orientés à la transversale d'une direction avant (V) de la machine de travail du sol (30), et la rotation pouvant être réglée par rapport à la construction de châssis (22) au moyen d'éléments d'ajustement de la profondeur (54),
- une section de compacteurs (S2) suivant directement et/ou indirectement ladite section d'ameublissement (S1), ladite section de compacteurs (S2) étant constituée d'au moins deux rouleaux de compactage (70) agencés l'un derrière l'autre et composés chacun d'une pluralité d'anneaux (72) répartis sur sa largeur, lesdits rouleaux de compactage (70) étant disposés en rotation sur un châssis de rouleau (74),
**caractérisée en ce que** le châssis de rouleau (74) est disposé sur la construction de châssis (22) en rotation autour d'un axe de rotation (76) orienté à la transversale d'une ou de ladite direction avant (V) et se trouvant entre les deux rouleaux de compactage (70), le châssis de rouleau (74) étant en liaison fonctionnelle avec un élément de butée (A) destiné à limiter la rotation du châssis de rouleau (74).

2. Machine de travail du sol selon la revendication 1, **caractérisée en ce que** celle-ci comprend une section de coupe (S3) et/ou section d'aplanissage (S4) agencée en amont et/ou en aval de la section d'ameublissement (S1).

3. Machine de travail du sol selon la revendication 1 ou 2, **caractérisée en ce que** les outils de travail (50) sont montés de manière pivotante sur un support (56), ledit support (56) étant disposé sur la construction de châssis (22) en rotation autour d'axes (52).

4. Machine de travail du sol selon l'une quelconque des revendications précédentes, **caractérisée en ce que** l'axe de rotation (76) se trouve au moins sensiblement au milieu entre lesdits deux rouleaux de compactage (70) et/ou que la section de compacteurs (S2) constitue un ensemble tandem.

5. Machine de travail du sol selon la revendication 4, **caractérisée en ce que** l'axe de rotation (76) se trouve au-dessus de l'emplacement où sont disposés les rouleaux de compactage (70).

6. Machine de travail du sol selon l'une quelconque des revendications précédentes, **caractérisée en ce que** l'élément de butée (A) peut être réglé de manière variable.

7. Machine de travail du sol selon l'une quelconque des revendications précédentes, **caractérisée en ce que** l'élément de butée (A) peut prendre deux positions, lesquelles positions définissent chacune des degrés de mobilité de la section de compacteurs (S2).

8. Machine de travail du sol selon la revendication 7, **caractérisée en ce que** les degrés de mobilité sont différents.

9. Machine de travail du sol selon l'une quelconque des revendications précédentes, **caractérisée en ce que** des découpes et/ou logements, dans lesquels les outils de travail (50) des sections sont disposés, sont associés à la construction de châssis (22).

10. Machine de travail du sol selon l'une quelconque des revendications précédentes, **caractérisée en ce qu'**un élément de précontrainte est agencé entre le châssis de rouleau (74) et la construction de châssis (22).

11. Machine de travail du sol selon l'une quelconque des revendications précédentes, **caractérisée en ce que** celle-ci présente un segment médian (12) et des segments latéraux (14) fixés respectivement à gauche et à droite de celui-ci par des axes de pivotement (16) horizontaux, au moins une section d'ameublissement (S1) et/ou une section de compacteurs (S2) étant fixées au moins au niveau des segments latéraux (14), et au moins les rouleaux de compactage (70) de la section de compacteurs (S2) étant fixés dans le prolongement l'un de l'autre.

12. Machine de travail du sol selon l'une quelconque des revendications précédentes, **caractérisée en ce que** celle-ci présente une section d'épandage qui est disposée en rotation et/ou ajustable en hauteur sur la construction de châssis (22) et qui est fixée entre la section d'ameublissement (S1) et la section de compacteurs (S2) et/ou après la section de compacteurs (S2).
